# EUROPÄISCHE PATENTSCHRIFT

(11) **EP 1 853 530 B1**
(45) Veröffentlichungstag und Bekanntmachung des Hinweises auf die Patenterteilung: **01.01.2014**
(21) Anmeldenummer: 06706787.6
(22) Anmeldetag: 09.02.2006
(51) Int. Cl.: C04B 28/02, C04B 111/40

(54) **SPACHTELMASSE MIT LEICHTZUSCHLAG**
FILLER WITH LIGHTWEIGHT AGGREGATES
MASTIC CONTENANT DES AGREGATS LEGERS

(30) Priorität: 03.03.2005 DE 102005010307
(43) Veröffentlichungstag der Anmeldung: 14.11.2007
(73) Patentinhaber: Henkel AG & Co. KGaA, 40589 Düsseldorf (DE)
(72) Erfinder: WINDHÖVEL, Udo, 40789 Monheim (DE); FÜTTERER, Wilhelm, 45549 Sprockhövel (DE); WITZLEBEN, Steffen, 59379 Selm (DE); MOLEK, Marcin, 59423 Unna (DE)
(86) Internationale Anmeldenummer: PCT/EP2006/001152
(87) Internationale Veröffentlichungsnummer: WO 2006/092199

(56) Entgegenhaltungen:
- EP-A- 1 238 951
- DE-A1- 2 930 615
- DE-A1- 3 243 573
- DE-A1- 3 920 025
- DE-A1-102004 039 107
- DE-U1- 9 410 620
- FR-A- 1 352 694
- US-A- 5 603 759

## Beschreibung

Die vorliegende Erfindung betrifft eine Baustofftrockenmischung, insbesondere für ein hydraulisches Bindemittel, vorzugsweise für eine Spachtelmasse. Die Erfindung betrifft sowohl die Baustofftrockenmischung als solche als auch die mit Wasser angemachte Mischung (d. h. die eigentliche Spachtelmasse) sowie schließlich gleichermaßen die hieraus resultierende ausgehärtete Masse, insbesondere die auf einem Untergrund aufgebrachte und abgebundene bzw. ausgehärtete Spachtelmasse.

Weiterhin betrifft die vorliegende Erfindung die Verwendung der erfindungsgemäßen Baustofftrockenmischung in oder als hydraulisches Bindemittel, vorzugsweise in oder als Spachtelmasse.

Böden, welche mit einem Oberboden oder mit einem Oberbelag (z. B. einem PVC-Oberbelag) belegt werden, müssen für die Verlegung des Oberbodens bzw. des Oberbelags vorbereitet werden. Hierzu werden sogenannte Spachtelmassen auf dem mit dem Oberboden oder dem Oberbelag zu versehenden Untergrund aufgetragen, um etwaige Unebenheiten auszugleichen und den Boden für eine etwaige Verklebung des Oberbelags vorzubereiten.

Sogenannte Spachtelmassen - synonym auch bisweilen als Bodenausgleichsmassen bezeichnet - werden insbesondere im Bereich des Fußbodens zum Glätten, Egalisieren bzw. Nivellieren von entsprechenden Untergründen verwendet, welche anschließend mit einem Nutzbelag versehen werden sollen.

Derartige Spachtelmassen sind aus dem Stand der Technik in unterschiedlichster Zusammensetzung bekannt. Im allgemeinen bestehen derartige Spachtelmassen aus hydraulischen und/oder nichthydraulischen Bindemitteln, mineralischen Zuschlägen und sogenannten Zusatzmitteln (Additiven), wie z. B. Verflüssigern, Verzögerern, Beschleunigern, Stellmitteln etc.

Die Spachtelmassen des Standes der Techniksind meist nur wenig ergiebig, d. h. zum Ausgleich von Unebenheiten werden relativ große Mengen der Spachtelmassen benötigt. Zudem besitzen die Spachtelmassen des Standes der Technik im allgemeinen relativ hohe Frischrohdichten von im allgemeinen 1,8 bis 2,0 g/cm³, was insbesondere im Hinblick auf den Transportaufwand und den Aufwand des Verwenders nachteilig ist. Des weiteren lassen sie sich oftmals nur mit relativ hohem Auftragswiderstand auftragen.

Das Dokument DE 39 20 025 A1 beschreibt ein Additivgemisch mit Zellulosederivaten als Additiv-Hauptkomponente und untergeordnete Mengen einer Kombination von Verdicker und Verflüssiger. Dieses Gemisch soll eine Verbesserung der Verarbeitbarkeit und/oder der Pastenstruktur von Mörteln, Spachtelmassen und/oder Putzmassen auf Gipsbasis bewirken. Dieses Dokument offenbart weiterhin eine Rezeptur, welche Perlite enthält, also einen porösen Leichtzuschlagstoff vulkanischen Ursprungs.

Aus dem Dokument US 5,603,759 A1 ist eine Trockenmischung bekannt, welche ebenfalls als Leichtzuschlagstoff Perlite oder Tonerdemikrohohlkugeln enthält. Auch diese Leichtzuschlagstoffe sind poröse Zuschlagstoffe.

Die Aufgabe der vorliegenden Erfindung besteht nunmehr darin, eine Baustofftrockenmischung bereitzustellen, die sich für die Herstellung von Spachtelmassen eignet, welche die zuvor genannten Nachteile und Probleme des Standes der Technik zumindest weitgehend vermeiden oder wenigstens verringern. Gegenstand der vorliegenden Erfindung - gemäß einem ersten Aspekt der vorliegenden Erfindung - ist somit eine Baustofftrockenmischung, welche sich für die Herstellung von Spachtelmassen eignet und neben hydraulischen und/oder nichthydraulischen Bindemitteln sowie mineralischen Zuschlägen außerdem mindestens einen Leichtzuschlagstoff enthält, der nicht porös und/oder nicht wassersaugend ausgebildet ist.

Denn die Anmelderin hat überraschenderweise herausgefunden, daß sich Leichtzuschiäge ohne weiteres in Baustofftrockenmischungen, welche für die Herstellung von Spachtelmassen geeignet sind, inkorporieren lassen und auf diese Weise zu einer nennenswerten Reduzierung der Frischrohdichte der resultierenden, mit Wasser angemachten Spachtelmassen führen: Während die Spachtelmassen des Standes der Technik relativ hohe Frischrohdichten von im allgemeinen 1,8 bis 2,0 g/cm³ aufweisen, können diese Werte im Falle der erfindungsgemäßen Spachtelmassen auf deutlich geringere Frischrohdichten im Bereich von 1,0 bis 1,7 g/cm³, insbesondere 1,0 bis 1,5 g/cm³, vorzugsweise 1,1 bis 1,2 g/cm³, reduziert werden.

Durch die Inkorporierung der Leichtzuschläge läßt sich auch die Schüttdichte der Baustofftrockenmischung als solcher deutlich reduzieren: Während Trockenmischungen für Spachtelmassen nach dem Stand der Technik im allgemeinen Schüttdichten im

Bereich von 1,3 bis 1,4 g/cm³ aufweisen, liegen diese im Falle der erfindungsgemäßen Baustofftrockenmischungen unterhalb von 1,3 g/cm³, vorzugsweise im Bereich von 0,9 bis 1,2 g/cm³, besonders bevorzugt im Bereich von 1,0 bis 1,2 g/cm³. Hierdurch ergibt sich ein logistischer Vorteil aufgrund reduzierter Transportkosten sowie für den Anwender ein verringerter Kraftaufwand und somit ein ergonomischer Vorteil, da im Vergleich zu Spachtelmassen des Standes der Technik für dieselben Ausgleichsarbeiten geringere Mengen benötigt werden.

Denn - wie die Anmelderin überraschenderweise herausgefunden hat - führt die Inkorporierung von Leichtzuschlägen in die erfindungsgemäßen Baustofftrockenmischungen für Spachtelmassen auch dazu, daß die resultierenden Spachtelmassen deutlich ergiebiger sind als die Spachtelmassen des Standes der Technik, d. h. pro zu behandelnder bzw. zu nivellierender Fläche wird im Rahmen der vorliegenden Erfindung deutlich weniger Spachtelmasse benötigt (im allgemeinen mindestens 20 % verringerter Verbrauch an Spachtelmasse). Dennoch werden nach dem Abtrocknen und Aushärten ausreichende Druckfestigkeiten von mindestens 30 bis 40 Newton/mm² erreicht, d. h. die Leichtzuschläge beeinträchtigen die Druckfestigkeiten nicht in negativer Weise.

Neben einer Dichtereduzierung (gemeint ist sowohl die Schüttdichte in bezug auf die Trockenmischung als auch die Frischrohdichte in bezug auf die mit Wasser angemachte Spachtelmasse) und damit einhergehend einer Gewichtsreduzierung der Trockenmischung und neben einer Verringerung des Bindemittelbedarfs führt die Inkorporierung von Leichtzuschlägen in die Baustofftrockenmischungen nach der vorliegenden Erfindung, welche für die Herstellung von Spachtelmassen bestimmt sind, zudem zu einer Verbesserung der Eigenschaften des Endproduktes, wie z. B. einer verbesserten Temperaturschockbeständigkeit und einer verbesserten Dimensionsstabilität sowie einer verbesserten thermischen Isolation.

Überraschenderweise hat die Anmelderin herausgefunden, daß die Inkorporierung von Leichtzuschlägen in die erfindungsgemäßen Baustofftrockenmischungen deren Verarbeitungseigenschaften zu bzw. als Spachtelmassen nicht beeinträchtigt,

insbesondere solche Leichtzuschläge ohne weiteres homogen eingearbeitet bzw. dispergiert in den resultierenden Spachtelmassen verbleiben, ohne daß es zu einer Separation der Leichtzuschläge-an der Oberfläche der Spachtelmassen kommt: Mit anderen Worten lassen sich die Leichtzuschläge phasenstabil in die Spachtelmassen inkorporieren bzw. dispergieren.

Der Begriff "Leichtzuschlagstoff" - synonym auch als "Leichtzuschlag" bezeichnet - wird im Rahmen der vorliegenden Erfindung entsprechend der DIN 4226-2 (DIN 4226, Teil 2 vom Februar 2002) verwendet und bezeichnet insbesondere Zuschläge sehr unterschiedlicher Art, wie nachfolgend definiert, mit Kornrohdichten des Leichtzuschlagstoffs unterhalb von 2.000 kg/m³. Der Begriff der Kornrohdichte wird dabei im Sinne der DIN 4226-2 (Februar 2002) verwendet und bezeichnet insbesondere das Verhältnis aus der Trockenmasse nach Ofentrocknung der betreffenden Gesteinskörnung und ihrem Volumen im wassergesättigten, oberflächenbenetzten Zustand einschließlich des vorhandenen inneren abgeschlossenen Porenraumes. Die Kornrohdichte ist bei Leichtzuschlägen - im Verhältnis zu herkömmlichen mineralischen Zuschlägen (z. B. Quarzsand, Kalksteinmehl etc.) - infolge der hohen Porosität typischerweise besonders gering und liegt im vorgenannten Bereich unterhalb von 2.000 kg/m³, so daß sich hieraus der Name "Leichtzuschlag" oder "Leichtzuschtagstoff" erklären läßt.

Erfindungsgemäß geeignete Leichtzuschläge sind solche, wie sie in der DIN 4226-2 (Februar 2002) genannt sind.

Zu den erfindungsgemäß geeigneten Leichtzuschlagstoffen gehören Leichtzuschlagstoffe auf Basis natürlicher Gesteinskörnungen, Leichtzuschlagstoffe auf Basis natürlicher Rohstoffe, Leichtzuschlagstoffe auf Basis von aus industriellen Nebenprodukten hergestellten Gesteinskörnungen und Leichtzuschlagstoffe auf Basis von industriellen Nebenprodukten.

Geeigneterweise kann der erfindungsgemäß eingesetzte Leichtzuschlagstoff beispielsweise aus mineralischen Leichtzuschlagstoffen ausgewählt sein. Erfindungsgemäß ist der Leichtzuschlagstoff nichtporös und/oder nichtwassersaugend ausgebildet. Dies hat insbesondere den Vorteil, daß derartige Leichtzuschlagstoffe ein nur geringes Wasserbindevermögen besitzen, so daß das Auftrags-, Abtrocknungs-und Aushärtungsverhalten nicht in negativer Weise beeinträchtigt, insbesondere nicht verlangsamt wird und eine kurzfristige Belegbarkeit des mit der erfindungsgemäßen Spachtelmasse behandelten Bodens gegeben ist. Daher sind nichtporöse und/oder nichtwassersaugende Leichtzuschlagstoffe bevorzugt.

Gemäß einer besonderen Ausführungsform der vorliegenden Erfindung kommen Leichtzuschläge mit Schüttdichten unterhalb von 1 g/cm³ zum Einsatz. Denn überraschenderweise hat die Anmelderin gefunden, daß als Zuschläge für selbstverlaufende Spachtelmassen auch Leichtzuschläge mit Schüttdichten unter 1 g/cm³ eingesetzt werden können. Dies ist insofern überraschend, als üblicherweise zu erwarten gewesen wäre, daß die Zugabe von Leichtzuschlägen mit Schüttdichten unterhalb von 1 g/cm³ in einer Spachtelmasse zu einer Separation der Leichtzuschläge an der Oberfläche führen sollte, was aber nicht der Fall ist.

Gemäß einer besonders bevorzugten Ausführungsform ist der Leichtzuschlagstoff ausgewählt aus Glas-, Kunststoff- oder keramischen Mikrohohlkugeln, insbesondere keramischen Mikrohohlkugeln oder Glasmikrohohlkugeln, vorzugsweise keramischen Mikrohohlkugeln und Glasmikrohohlkugeln auf Basis von Silikat/Aluminat-Gläsern bzw. -Keramiken. Solche Mikrohohlkugeln sind kommerziell erhältlich, beispielsweise von der Omega Minerals Germany GmbH, Norderstedt, unter der Produktbezeichnung "ISOSPHERES SG-300-B". Erfindungsgemäß besonders bevorzugte Mikrohohlkugeln besitzen Schüttgewichte im Bereich von 200 bis 500 g/l, insbesondere 350 bis 450 g/l, und/oder Schüttvolumina im Bereich von 2.000 bis 3.000 ml/kg, insbesondere 2.200 bis 2.860 ml/kg, und/oder Dichten im Bereich von 0,5 bis 0,8g/cm³, insbesondere 0,65 bis

0,75 g/cm³. Erfindungsgemäß bevorzugt verwendete Mikrohohlkugeln besitzen Härten nach Mohs von mindestens 4, insbesondere mindestens 4,5, besonders bevorzugt mindestens 5, und/oder Druckfestigkeiten von mindestens 12 MPa, insbesondere mindestens 13 MPa, vorzugsweise mindestens 14 MPa. Erfindungsgemäß bevorzugte Mikrohohlkugeln haben einen Hüllendurchmesser, welcher nur ca. 5 bis 15 %, vorzugsweise nur 10 %, der Gesamtkugeln ausmacht (d. h. mit anderen Worten ca. 85 % bis 95 %, vorzugsweise 90 %, der Kugeln werden vom Hohlraum gebildet).

Im allgemeinen werden Leichtzuschlagstoffe verwendet, deren mittlere Teilchengrößen 10 bis 500 µm, insbesondere 50 bis 200 µm, vorzugsweise 100 bis 150 µm, besonders bevorzugt 110 bis 130 µm, betragen. Im allgemeinen weisen die erfindungsgemäßen Leichtzuschläge eine Korngrößenverteilung im Bereich von 10 bis 500 µm, insbesondere 10 bis 300 µm, auf.

Die Menge an Leichtzuschlagstoffen in der erfindungsgemäßen Baustofftrockenmischung kann in weiten Bereichen variieren. Im allgemeinen liegt die Menge an Leichtzuschlagstoff(en), bezogen auf die Baustofftrockenmischung, im Bereich von 5 bis 15 Gew.-%, insbesondere 7,5 bis 12,5 Ges.-%, vorzugsweise 9 bis 11 Gew.-%, besonders bevorzugt bei Gew.-%. Dennoch kann es einzelfallbedingt oder anwendungsbezogen gegebenenfalls erforderlich sein, von den vorgenannten Werten abzuweichen. Werte deutlich oberhalb von 15 Gew.-% sollten erfindungsgemäß im allgemeinen allerdings vermieden werden, weil dann die Verarbeitungseigenschaften der Spachtelmassen in negativer Weise beeinträchtigt werden können, insbesondere ein thixotropes Verhalten beobachtet wird, während bei zu geringen Mengen an Leichtzuschlägen deutlich unterhalb von 5 Gew.-% die gewünschten Effekte nicht immer im ausreichenden Maße erreicht werden können.

Was die hydraulischen und/oder nichthydraulischen Bindemittel in der erfindungsgemäßen Baustofftrockenmischung anbelangt, so können diese beispielsweise ausgewählt sein aus Zementen, insbesondere Portlandzementen und Tonerdeschmelzzementen, Puzzolanen, Kalk und Gips sowie deren Mischungen. Im

Falle der Verwendung von Gips wird insbesondere das sogenannte α-Halbhydrat, d. h. das Calciumsulfathemihydrat in der sogenannten α-Modifikation, verwendet. Während solche Bindemittel, die nur an Luft erhärten ("Luftbinder", wie z. B. Gips, Anhydrit, Weißkalk etc.) im allgemeinen als nichthydraulische Bindemittel bezeichnet werden, bezeichnet man im allgemeinen als hydraulische Bindemittel solche, die auch unter Wasser abbinden (z. B. hydraulischer Kalk, Zemente, Puzzolane etc.).

Die Menge an hydraulischen und/oder nichthydraulischen Bindemittel(n) in der erfindungsgemäßen Baustofftrockenmischung kann in weiten Bereichen variieren. Im allgemeinen liegen diese Mengen, bezogen auf die Baustofftrockenmischung, im Bereich von 5 bis 70 Gew.-%, insbesondere 10 bis 60 Gew.-%, vorzugsweise 15 bis 55 Gew.-%. Dennoch kann es einzelfallbedingt oder anwendungsbezogen gegebenenfalls erforderlich sein, von den vorgenannten Werten abzuweichen.

Was die mineralischen Zuschläge in der erfindungsgemäßen Baustofftrockenmischung anbelangt, so kommen insbesondere Kalksteinmehle und Quarzsande zum Einsatz. Zuschläge sind im Unterschied zu den Bindemitteln die Gemenge aus Einzelkörnern, welche mit den erhärteten Bindemitteln ein künstliches Konglomerat bilden (vgl. hierzu auch DIN 4226, Teile 1 bis 4).

Die Menge an mineralischen Zuschlägen in der erfindungsgemäßen Baustofftröckenmischung kann gleichermaßen in weiten Bereichen variieren; im allgemeinen verwendet man Mengen von 5 bis 50 Gew.-%, insbesondere 10 bis 40 Gew.-%, vorzugsweise 15 bis 35 Gew.-%, bezogen auf die erfindungsgemäße Baustofftrockenmischung. Dennoch kann es einzelfallbedingt oder anwendungsbezogen gegebenenfalls erforderlich sein, von den vorgenannten Werten abzuweichen.

Weiterhin kann die erfindungsgemäße Baustofftrockenmischung zur Optimierung der Anwendungseigenschaften gegebenenfalls ein die rheologischen und/oder physikalischen Eigenschaften verbesserndes bzw. beeinflussendes Additiv enthalten. Dieses Additiv kann beispielsweise auf Basis eines in Wasser redispergierbaren

polymeren Bindemittels, insbesondere eines sogenannten Dispersionspulvers, vorzugsweise auf der Basis von gegebenenfalls polyvinylalkoholmodifiziertem Vinylacetat und/oder Vinylversatat, ausgebildet sein. Ein derartiges Additiv kann, bezogen auf die Baustofftrockenmischung, beispielsweise in Mengen von 0,01 bis 5 Gew.-%, insbesondere 0,1 bis 5 Gew.-%, vorzugsweise 1 bis 4 Gew.-%, besonders bevorzugt 2 bis 3 Gew.-%, eingesetzt werden.

Weiterhin kann vorgesehen sein, daß die erfindungsgemäße Baustofftrockenmischung außerdem weitere Inhaltsstoffe und/oder Additive (Zusatzmittel) enthält. Solche Inhaltsstoffe bzw. Additive können beispielsweise ausgewählt sein aus der Gruppe von Verflüssigern (Fließmitteln, Verlaufsmitteln), Verzögerern, Beschleunigern (Anregern), Stellmitteln, Stabilisierungsmitteln, Entschäumern, Dichtungsmitteln, Füllstoffen und dergleichen.

Beispielsweise kann die erfindungsgemäße Baustofftrockenmischung mindestens einen Verflüssiger - synonym auch als Fließmittel oder Verlaufsmittel bezeichnet - enthalten, insbesondere in Mengen von 0,001 bis 5 Gew.-%, vorzugsweise 0,05 bis 2 Gew.-%, besonders bevorzugt 0,1 bis 0,5 Gew.-%, bezogen auf die Baustofftrockenmischung. Beispiele für erfindungsgemäß geeignete Verflüssiger sind z. B. Verflüssiger auf der Basis gegebenenfalls modifizierter Polycarboxylatether, Verflüssiger auf der Basis von Melaminsulfonaten, Verflüssiger auf der Basis von Casein, etc. sowie Mischungen derartiger Verflüssiger. Insbesondere werden die Verflüssiger derart ausgewählt, daß sie den Wasserbedarf beim Anmachen reduzieren und zudem vorteilhafterweise auch zu einer besonders guten Frühfestigkeitsentwicklung führen bzw. diese fördern.

Weiterhin kann es für die Optimierung der Anwendungseigenschaften förderlich sein, wenn die erfindungsgemäße Baustofftrockenmischung außerdem mindestens einen Beschleuniger (Anreger), insbesondere einen Erhärtungsbeschleuniger enthält, beispielsweise auf Basis von Alkalicarbonaten, bevorzugt Lithiumcarbonat. Der Beschleuniger kann in Mengen von 0,001 bis 2 Gew.-%, insbesondere in Mengen von 0,05 bis 0,025 Gew.-%, bezogen auf die Baustofftrockenmischung, eingesetzt werden.

Weiterhin kann es vorteilhaft sein, wenn die erfindungsgemäße Baustofftrockenmischung außerdem mindestens einen Verzögerer enthält, beispielsweise auf Basis von Weinsäure, Citronensäure oder deren Salzen. Der Verzögerer kann in Mengen von 0,001 bis 2 Gew.-%, insbesondere in Mengen von 0,05 bis 0,025 Gew.-%, bezogen auf die Baustofftrockenmischung, eingesetzt werden.

Weiterhin kann die erfindungsgemäße Baustofftrockenmischung auch mindestens einen Entschäumer enthalten. Ein solcher Entschäumer kann insbesondere in Mengen von 0,001 bis 1 Gew.-%, vorzugsweise 0,05 bis 0,3 Gew.-%, bezogen auf die Baustofftrockenmischung, eingesetzt werden.

Des weiteren kann die erfindungsgemäße Baustofftrockenmischung außerdem mindestens ein Stabilisierungsmittel enthalten. Als Stabilisierungsmittel können beispielsweise Heteropolysaccharide, wie z. B. Gummen (z. B. Diuthan Gum), oder aber auch Stabilisierungsmittel auf Basis von Cellulose oder Cellulosederivaten (z. B. Hydroxyethylcellulose) zum Einsatz kommen. Gleichermaßen können verschiedene Stabilisierungsmittel miteinander kombiniert werden. Die Menge an Stabilisierungsmittel kann gleichermaßen in weiten Bereichen variieren. Im allgemeinen werden Mengen von 0,001 bis 2 Gew.-%, insbesondere 0,02 bis 0,5 Gew.-%, bezogen auf die Baustofftrockenmischung, eingesetzt.

Außerdem kann die erfindungsgemäße Trockenmischung mindestens einen Zusatz zur Einstellung des Wasserrückhaltevermögens enthalten.

Für alle vorgenannten Mengenangaben gilt, daß es einzelfallbedingt oder anwendungstechnisch gegebenenfalls erforderlich sein kann, von diesen Mengenangaben abzuweichen. Dies zu entscheiden, liegt im Ermessen des Fachmanns.

Im allgemeinen wird die erfindungsgemäße Baustofftrockenmischung derart formuliert, daß mehr als 99 % der Teilchen der Baustofftrockenmischung Teilchengrößen bzw. Teilchendurchmesser unterhalb von 500 µm, insbesondere unterhalb von 400 µm,

vorzugsweise unterhalb von 355 µm, gemäß Siebanalyse (DIN 66 165, April 1987, insbesondere Teil 2, Trockensiebung) aufweisen und/oder daß mindestens 90 % der Teilchen der Baustofftrockenmischung Teilchengrößen bzw. Teilchendurchmesser unterhalb von 200 µm gemäß Siebanalyse aufweisen und/oder daß mindestens 80 %, vorzugsweise mindestens 85 % der Teilchen der Baustofftrockenmischung Teilchengrößen bzw. Teilchendurchmesser im Bereich von 4 bis 200 µm gemäß Siebanalyse aufweisen.

Wie zuvor beschrieben, ist in der erfindungsgemäßen Baustofftrockenmischung gegenüber herkömmlichen, zur Herstellung von Spachtelmassen geeigneten Baustofftrockenmischungen des Standes der Technik deutlich reduziert. Im Vergleich zum Stand der Technik, gemäß dem derartige Baustofftrockenmischungen Schüttdichten im Bereich von 1,3 bis 1,4 g/cm³ aufweisen, liegen die Schüttdichten der erfindungsgemäßen Baustofftrockenmischungen unterhalb von 1,3 g/cm³, vorzugsweise im Bereich von 0,9 bis 1,2 g/cm³, besonders bevorzugt im Bereich von . 1,0 bis 1,2 g/cm³. Wie zuvor erläutert, werden hierdurch nicht nur die Transportkosten verringert, sondern auch für den Anwender ergeben sich vorteilhafte Eigenschaften in bezug auf die Handhabung, insbesondere da leichtere Gebinde zum Einsatz kommen können.

Die erfindungsgemäße Baustofftrockenmischung bzw. Rezeptur eignet sich insbesondere zur Verwendung in sogenannten Spachtelmassen, wie zuvor definiert, bzw. zur Herstellung von Spachtelmassen. Gegenstand der vorliegenden Erfindung - gemäß einem weiteren Aspekt der vorliegenden Erfindung - ist somit die Verwendung der Baustofftrockenmischung bzw. Rezeptur nach der vorliegenden Erfindung in Spachtelmassen bzw. zur Herstellung von Spachtelmassen.

Weiterer Gegenstand der vorliegenden Erfindung - gemäß einem wiederum weiteren Aspekt der vorliegenden Erfindung - sind Spachtelmassen, die unter Verwendung der erfindungsgemäßen Baustofftrockenmischung durch Anmachen mit Wasser bzw. durch Zusetzen von Wasser hergestellt werden können. Im allgemeinen werden die erfindungsgemäßen Baustofftrockenmischungen unter Zugabe von 10 bis 30 Gew.-%, vorzugsweise 20 bis 30 Gew.-%, Wasser angemacht.

Die erfindungsgemäßen Spachtelmassen, die sich durch Zusatz von Wasser zu den erfindungsgemäßen Baustofftrockenmischungen herstellen lassen, haben eine deutlich reduzierte Frischrohdichte im Bereich von 1,0 bis 1,7 g/cm³, insbesondere 1,0 bis 1,5 g/cm³, vorzugsweise 1,1 bis 1,2 g/cm³- im Vergleich zu Frischrohdichten von herkömmlichen Spachtelmassen des Standes der Technik mit Werten von 1,8 bis 2,0 g/cm³. Die erfindungsgemäßen Spachtelmassen sind somit besser handhabbar und zudem ergiebiger als herkömmliche Spachtelmassen des Standes der Technik.

Weiterer Gegenstand der vorliegenden Erfindung sind schließlich die auf einen Untergrund aufgetragenen und nachfolgend abgebundenen und abgetrockneten Spachtelmassen. Diese weisen nach Abbinden und Abtrocknung gute Druckfestigkeiten von mindestens 30 bis 40 Newton/mm² auf.

Die erfindungsgemäßen Baustofftrockenmischungen und die hieraus erhältlichen erfindungsgemäßen Spachtelmassen weisen eine Vielzahl von Vorteilen auf, wie sie vorstehend teilweise bereits geschildert worden sind. Dennoch sei nachfolgend noch auf eine Reihe weiterer Vorteile hingewiesen, wobei diese Schilderung nur beispielhaft und nichtbeschränkend zu verstehen ist:

Die erfindungsgemäßen Baustofftrockenmischungen bzw. die hieraus erhältlichen erfindungsgemäßen Spachtelmassen liefern einen sehr emissionsarmen, selbstverlaufenden zementären Bodenausgleich für die Erstellung eines normgerechten Untergrundes für die Aufnahme von Bodenbelägen (Anforderungen-nach ATV DIN 18365). Sie sind geeignet für den Ausgleich von Estrichen, Betonen, Fliesen, Steinuntergründen etc. und somit sehr vielseitig anwendbar.

Mit den erfindungsgemäßen Baustofftrockenmischungen bzw. den hieraus erhältlichen erfindungsgemäßen Spachtelmassen lassen sich Unebenheiten ohne weiteres ausgleichen, und zwar im Bereich von 0,5 bis 20 mm in nur einem einzigen Arbeitsgang.

Im Vergleich zu herkömmlichen Spachtelmassen des Standes der Technik resultiert ein mindestens 20 % geringerer Verbrauch an Spachtelmasse aufgrund der Inkorporierung der speziellen Leichtzuschläge in den genannten Mengenbereichen. Zudem ist der Auftragswiderstand im Vergleich zu herkömmlichen Spachtelmassen des Standes der Technik deutlich reduziert. Die erfindungsgemäßen Spachtelmassen sind zudem pumpfähig.

Weitere Ausführungsformen, Ausgestaltungen, Abwandlungen und Variationen der vorliegenden Erfindung sind für den Fachmann beim Lesen der vorliegenden Anmeldung ohne weiteres erkennbar und realisierbar, ohne daß er dabei den Rahmen der vorliegenden Erfindung verläßt.

Die vorliegende Erfindung wird anhand der folgenden Ausführungsbeispiele veranschaulicht, welche die vorliegende Erfindung jedoch keinesfalls beschränken sollen.

### Ausführungsbeispiele:

Im folgenden sind Rezepturen für Baustofftrockenmischungen nach der vorliegenden Erfindung wiedergegeben, ausgehend von denen sich durch Zusetzen von Wasser erfindungsgemäße Spachtelmassen herstellen lassen:

### Beispiel 1:

| | |
|---|---|
| Portlandzement | 7 Gew.-Teile |
| Tonerdeschmelzzement | 20 Gew.-Teile |
| Alphahalbhydrat | 9 Gew.-Teile |
| Kalksteinmehl | 24 Gew.-Teile |
| Leichtzuschlag | 10 Gew.-Teile |
| Quarzzuschlag / 0,1-0,3 mm | 26 Gew.-Teile |
| Dispersionspulver | 3 Gew.-Teile |
| Polycarboxylat | 0,5 Gew.-Teile |
| Casein | 0,2 Gew.-Teile |
| Melaminsulfonat | 0,5 Gew.-Teile |
| Stabilisierer | 0,02 Gew.-Teile |
| Verzögerer | 0,06 Gew.-Teile |
| Anreger | 0,01 Gew.-Teile |

### Beispiel 2:

| | |
|---|---|
| Alphahalbhydrat | 56 Gew.-Teile |
| Kalksteinmehl | 15 Gew.-Teile |
| Leichtzuschlag | 15 Gew.-Teile |
| Quarzzuschlag / 0,1-0,3 mm | 10 Gew.-Teile |
| Dispersionspulver | 3 Gew.-Teile |
| Casein | 0,2 Gew.-Teile |
| Melaminsulfonat | 1,0 Gew.-Teile |
| Stabilisierer | 0,02 Gew.-Teile |
| Verzögerer | 0,02 Gew.-Teile |

### Beispiel 3:

| | |
|---|---|
| Portlandzement | 105 Gew.-Teile |
| Tonerdeschmelzzement | 180 Gew.-Teile |
| Alphahalbhydrat | 85 Gew.-Teile |
| Quarzsand Typ I | 105 Gew.-Teile |
| Kalksteinfeinmehl | 285 Gew.-Teile |
| Quarzsand Typ II | 110 Gew.-Teile |
| Leichtzuschlag | 100 Gew.-Teile |
| Dispersionspulver | 20 Gew.-Teile |
| Fließmittel | 3 Gew.-Teile |
| Beschleuniger | 2 Gew.-Teile |
| Aluminiumsulfat | 1,8 Gew.-Teile |
| Verzögerer | ggf. bis zu 1,3 Gew.-Teile |
| Stabilisierer Typ I | ggf. bis zu 0,8 Gew.-Teile |
| Stabilisierer Typ II | 1,0 Gew.-Teile |

## Patentansprüche

1. Baustofftrockenmischung, insbesondere für die Herstellung von Spachtelmassen, enthaltend hydraulische und/oder nichthydraulische Bindemittel und mineralische Zuschläge,
**dadurch gekennzeichnet,**
**daß** die Baustofftrockenmischung außerdem mindestens einen Leichtzuschlagstoff enthält, der nichtporös und/oder nichtwassersaugend ausgebildet ist.

2. Baustoffmischung nach Anspruch 1, **dadurch gekennzeichnet, daß** der Leichtzuschlagstoff ausgewählt ist aus der Gruppe von natürlichen Gesteinskörnungen, natürlichen Rohstoffen, aus industriellen Nebenprodukten hergestellten Gesteinskörnungen und industriellen Nebenprodukten und/oder daß der Leichtzuschlagstoff aus mineralischen Leichtzuschlagstoffen ausgewählt ist.

3. Baustofftrockenmischung nach Anspruch 1 oder 2, **dadurch gekennzeichnet, daß** der Leichtzuschlagstoff ausgewählt ist aus Glas-, Kunststoff- oder keramischen Mikrohohlkugeln, insbesondere Glas- und keramischen Mikrohohlkugeln, vorzugsweise Glas- und keramischen Mikrohohlkugeln auf Basis von Silikat/Aluminat-Gläsern bzw. -Keramiken.

4. Baustofftrockenmischung nach einem oder mehreren der vorangehenden Ansprüche, **dadurch gekennzeichnet, daß** der Leichtzuschlagstoff mittlere Teilchengrößen von 10 bis 500 µm, insbesondere 50 bis 200 µm, vorzugsweise 100 bis 150 µm, besonders bevorzugt 110 bis 130 µm, aufweist und/oder daß der Leichtzuschlagstoff eine Korngrößenverteilung im Bereich von 10 bis 500 µm, insbesondere 10 bis 300 µm, aufweist.

5. Baustofftrockenmischung nach einem oder mehreren der vorangehenden Ansprüche, **dadurch gekennzeichnet, daß** die Kornrohdichte des Leichtzuschlagstoffs nach DIN 4226-2 (Februar 2002) < 2.000 kg/m³ ist.

6. Baustofftrockenmischung nach einem oder mehreren der vorangehenden Ansprüche, **dadurch gekennzeichnet, daß** die Menge an Leichtzuschlagstoff, bezogen auf die Baustofftrockenmischung, 5 bis 15 Gew.-%, insbesondere 7,5 bis 12,5 Gew.-%, vorzugsweise 9 bis 11 Gew.-%, besonders bevorzugt 10 Gew.-%, beträgt.

7. Baustofftrockenmischung nach einem oder mehreren der vorangehenden Ansprüche, **dadurch gekennzeichnet, daß** die hydraulischen und nichthydraulischen Bindemittel ausgewählt sind aus der Gruppe von Zementen, insbesondere Portlandzementen und Tonerdeschmelzzementen, Puzzolanen, Kalk und Gips, insbesondere in Form von α-Halbhydrat (Calciumsulfathemihydrat in der α-Modifikation), sowie deren Mischungen.

8. Baustofftrockenmischung nach einem oder mehreren der vorangehenden Ansprüche, **dadurch gekennzeichnet, daß** die hydraulischen und/oder nichthydraulischen Bindemittel, bezogen auf die Baustofftrockenmischung, in Mengen von 5 bis 70 Gew.-%, insbesondere 10 bis 60 Gew.-%, vorzugsweise 15 bis 55 Gew.-%, vorhanden sind.

9. Baustofftrockenmischung nach einem oder mehreren der vorangehenden Ansprüche, **dadurch gekennzeichnet, daß** die mineralischen Zuschläge ausgewählt sind aus der Gruppe von Kalksteinmehlen und Quarzsanden.

10. Baustofftrockenmischung nach einem oder mehreren der vorangehenden Ansprüche, **dadurch gekennzeichnet, daß** die mineralischen Zuschläge, bezogen auf die Baustofftrockenmischung, in Mengen von 5 bis 50 Gew.-%, insbesondere 10 bis 40 Gew.-%, vorzugsweise 15 bis 35 Gew.-%, vorhanden sind.

11. Baustofftrockenmischung nach einem oder mehreren der vorangehenden Ansprüche, **dadurch gekennzeichnet, daß** die Baustofftrockenmischung außerdem mindestens ein polymeres Bindemittel, insbesondere Dispersionspulver, vorzugsweise auf der Basis von gegebenenfalls polyvinylalkoholmodifiziertem Vinylacetat und/oder Vinylversatat, aufweist, insbesondere in Mengen, bezogen auf die Baustofftrockenmischung, von 0,01 bis 5 Gew.-%, insbesondere 0,1 bis 5 Gew.-%, vorzugsweise 1 bis 4 Gew.-%, besonders bevorzugt 2 bis 3 Ges.-%

12. Baustofftrockenmischung nach einem oder mehreren der vorangehenden Ansprüche, **dadurch gekennzeichnet, daß** die Baustofftrockenmischung außerdem weitere Inhaltsstoffe und/oder Additive (Zusatzmittel) enthält, insbesondere ausgewählt aus der Gruppe von Verflüssigern, Verzögerern, Beschleunigern, Stellmitteln, Stabilisierungsmitteln, Entschäumern, Dichtungsmitteln und Füllstoffen.

13. Baustofftrockenmischung nach einem oder mehreren der vorangehenden Ansprüche, **dadurch gekennzeichnet, daß** die Baustofftrockenmischung eine Schüttdichte < 1,3 g/cm³, vorzugsweise im Bereich von 0,9 bis 1,2 g/cm³, besonders bevorzugt im Bereich von 1,0 bis 1,2 g/cm³, aufweist.

14. Baustofftrockenmischung nach einem oder mehreren der vorangehenden Ansprüche, **dadurch gekennzeichnet, daß** mehr als 99 % der Teilchen der Baustofftrockenmischung Teilchengrößen bzw. Teilchendurchmesser unterhalb von 500 µm, insbesondere unterhalb von 400 µm, vorzugsweise unterhalb von 355 µm, gemäß Siebanalyse, aufweisen und/oder daß mindestens 90 % der Teilchen der Baustofftrockenmischung Teilchengrößen bzw. Teilchendurchmesser unterhalb von 200 µm gemäß Siebanalyse aufweisen und/oder daß mindestens 80 %, vorzugsweise mindestens 85 % der Teilchen der Baustofftrockenmischung Teilchengrößen bzw. Teilchendurchmesser im Bereich von 4 bis 200 µm gemäß Siebanalyse aufweisen.

15. Verwendung einer Baustofftrockenmischung nach einem der Ansprüche 1 bis 14 in Spachtelmassen und/oder zur Herstellung von Spachtelmassen.

16. Spachtelmasse, herstellbar unter Verwendung einer Baustofftrockenmischung nach den Ansprüchen 1 bis 14 durch Anmachen mit Wasser, insbesondere unter Zugabe von 10 bis 30 Gew.-%, vorzugsweise 20 bis 30 Gew.-%, Wasser, und/oder enthaltend eine Baustofftrockenmischung nach den Ansprüchen 1 bis 16 sowie Wasser, insbesondere in Mengen von 10 bis 30 Gew.-%, vorzugsweise 20 bis 30 Gew.-%, bezogen auf die Spachtelmasse.

17. Spachtelmasse nach Anspruch 16, **dadurch gekennzeichnet, daß** die Spachtelmasse eine Frischrohdichte im Bereich von 1,0 bis 1,7 g/cm³, insbesondere 1,0 bis 1,5 g/cm³, vorzugsweise 1,1 bis 1,2 g/cm³, aufweist.

18. Spachtelmasse, herstellbar unter Verwendung einer Baustofftrockenmischung nach einem der Ansprüche 1 bis 14 durch Anmachen mit Wasser, wobei die Spachtelmasse auf einen Untergrund aufgetragen und nachfolgend abgebunden und abgetrocknet ist.

19. Spachtelmasse nach Anspruch 18, **dadurch gekennzeichnet, daß** die auf einen Untergrund aufgetragene und nachfolgend abgebundene und abgetrocknete Spachtelmasse eine Druckfestigkeit von mindestens 30 bis 40 Newton/mm² aufweist.

## Claims

1. A building material dry mix, in particular for producing filler compositions containing hydraulic and/or non-hydraulic binders and mineral aggregates,
**characterised in that**
the building material dry mix moreover contains at least one lightweight aggregate which is designed to be non-porous and/or non-water-absorbent.

2. A building material mix according to claim 1, **characterised in that** the lightweight aggregate is selected from the group of natural rock aggregates, natural raw materials, rock aggregates produced from industrial secondary products, and industrial secondary products and/or in that the lightweight aggregate is selected from lightweight mineral aggregates.

3. A building material dry mix according to claim 1 or claim 2, **characterised in that** the lightweight aggregate is selected from hollow microspheres of glass, plastics or ceramics, in particular glass and ceramic hollow microspheres, preferably glass and ceramic hollow microspheres based on silicate/aluminate glasses or ceramics.

4. A building material dry mix according to one or more of the preceding claims, **characterised in that** the lightweight aggregate has average particle sizes of 10 to 500 µm, in particular 50 to 200 µm, preferably 100 to 150 µm, particularly preferably 110 to 130 µm, and/or **in that** the lightweight aggregate has a grain size distribution in the range from 10 to 500 µm, in particular 10 to 300 µm.

5. A building material dry mix according to one or more of the preceding claims, **characterised in that** the grain bulk density according to DIN 4226-2 (February 2002) of the lightweight aggregate is < 2,000 kg/m³.

6. A building material dry mix according to one or more of the preceding claims, **characterised in that** the quantity of lightweight aggregate, relative to the building material dry mix, amounts to 5 to 15 wt.%, in particular 7.5 to 12.5 wt.%, preferably 9 to 11 wt.%, particularly preferably 10 wt.%.

7. A building material dry mix according to one or more of the preceding claims, **characterised in that** the hydraulic and non-hydraulic binders are selected from the group of cements, in particular Portland cements and high alumina cements, pozzolans, lime and gypsum, in particular in the form of α-hemihydrate (calcium sulfate hemihydrate in the α-modification), and mixtures thereof.

8. A building material dry mix according to one or more of the preceding claims, **characterised in that** the hydraulic and/or non-hydraulic binders are present, relative to the building material dry mix, in quantities of 5 to 70 wt.%, in particular 10 to 60 wt.%, preferably 15 to 55 wt.%.

9. A building material dry mix according to one or more of the preceding claims, **characterised in that** the mineral aggregates are selected from the group of limestone powders and silica sands.

10. A building material dry mix according to one or more of the preceding claims, **characterised in that** the mineral aggregates are present, relative to the building material dry mix, in quantities of 5 to 50 wt.%, in particular 10 to 40 wt.%, preferably 15 to 35 wt.%.

11. A building material dry mix according to one or more of the preceding claims, **characterised in that** the building material dry mix moreover comprises at least one polymeric binder, in particular dispersion powder, preferably based on optionally polyvinyl alcohol-modified vinyl acetate and/or vinyl versatate, in particular in quantities, relative to the building material dry mix, of 0.01 to 5 wt.%, in particular 0.1 to 5 wt.%, preferably 1 to 4 wt.%, particularly preferably 2 to 3 wt.%.

12. A building material dry mix according to one or more of the preceding claims, **characterised in that** the building material dry mix moreover contains further ingredients and/or additives (admixtures), in particular selected from the group of liquefiers, retarders, accelerators, suspending agents, stabilisers, defoamers, sealants and fillers.

13. A building material dry mix according to one or more of the preceding claims, **characterised in that** the building material dry mix has a bulk density < 1.3 g/cm³, preferably in the range from 0.9 to 1.2 g/cm³, particularly preferably in the range from 1.0 to 1.2 g/cm³.

14. A building material dry mix according to one or more of the preceding claims, **characterised in that** more than 99% of the particles of the building material dry mix have particle sizes or particle diameters of below 500 µm, in particular below 400 µm, preferably below 355 µm according to screen analysis and/or **in that** at least 90% of the particles of the building material dry mix have particle sizes or particle diameters of below 200 µm according to screen analysis and/or **in that** at least 80%, preferably at least 85% of the particles of the building material dry mix have particle sizes or particle diameters in the range from 4 to 200 µm according to screen analysis.

15. Use of a building material dry mix according to any one of claims 1 to 14 in filler compositions and/or for producing filler compositions.

16. A filler composition which can be produced using a building material dry mix according to claims 1 to 14 by mixing with water, in particular with the addition of 10 to 30 wt.%, preferably 20 to 30 wt.%, water and/or which contains a building material dry mix according to claims 1 to 16 together with water, in particular in quantities of 10 to 30 wt.%, preferably 20 to 30 wt.%, relative to the filler composition.

17. A filler composition according to claim 16, **characterised in that** the filler composition has a fresh bulk density in the range from 1.0 to 1.7 g/cm³, in particular 1.0 to 1.5 g/cm³, preferably 1.1 to 1.2 g/cm³.

18. A filler composition which can be produced using a building material dry mix according to any one of claims 1 to 14 by mixing with water, the filler composition being applied onto a substrate and subsequently set and dried.

19. A filler composition according to claim 18, **characterised in that** the filler composition which has been applied onto a substrate and subsequently set and dried has a compressive strength of at least 30 to 40 Newton/mm².

## Revendications

1. Mélange sec pour matériau de construction, en particulier pour la préparation de masses de bouchage, contenant des liants hydrauliques et/ou non hydrauliques et des agrégats minéraux, **caractérisé en ce que** le mélange sec pour matériaux de construction contient en outre au moins un agrégat léger, qui est formé de manière non poreuse et/ou n'absorbant pas l'eau.

2. Mélange pour matériau de construction selon la revendication 1, **caractérisé en ce que** l'agrégat léger est choisi dans le groupe des granulats naturels, des matières premières naturelles, parmi les granulats préparés à partir de produits secondaires industriels et parmi les produits secondaires industriels et/ou **en ce que** l'agrégat léger est choisi parmi les agrégats légers minéraux.

3. Mélange sec pour matériaux de construction selon la revendication 1 ou 2, **caractérisé en ce que** l'agrégat léger est choisi parmi les microbilles creuses en verre, en matériau synthétique ou en céramique, en particulier les microbilles creuses en verre et en céramique, de préférence les microbilles creuses en verre et en céramique à base de verres ou de céramiques de silicate/aluminate.

4. Mélange sec pour matériaux de construction selon l'une ou plusieurs des revendications précédentes, **caractérisé en ce que** l'agrégat léger présente des grosseurs moyennes de particule de 10 à 500 µm, en particulier de 50 à 200 µm, de préférence de 100 à 150 µm, de manière particulièrement préférée de 110 à 130 pm, et/ou **en ce que** l'agrégat léger présente une répartition granulométrique dans la plage de 10 à 500 µm, en particulier de 10 à 300 µm.

5. Mélange sec pour matériaux de construction selon l'une ou plusieurs des revendications précédentes, **caractérisé en ce que** la densité apparente des grains de l'agrégat léger selon la norme DIN 4226-2 (février 2002) est < 2000 kg/m³.

6. Mélange sec pour matériaux de construction selon l'une ou plusieurs des revendications précédentes, **caractérisé en ce que** la quantité d'agrégat léger, par rapport au mélange sec pour matériaux de construction, représente 5 à 15% en poids, en particulier 7,5 à 12,5% en poids, de préférence 9 à 11 % en poids, de manière particulièrement préférée 10% en poids.

7. Mélange sec pour matériaux de construction selon l'une ou plusieurs des revendications précédentes, **caractérisé en ce que** les liants hydrauliques et non hydrauliques sont choisis dans le groupe formé par les ciments, en particulier les ciments Portland et le ciment alumineux, les pouzzolanes, la chaux et le plâtre, en particulier sous forme d'hémihydrate α (sulfate de calcium hémihydraté sous la modification α), ainsi que leurs mélanges.

8. Mélange sec pour matériaux de construction selon l'une ou plusieurs des revendications précédentes, **caractérisé en ce que** les liants hydrauliques et/ou non hydrauliques, par rapport au mélange sec pour matériaux de construction, sont présents en des quantités de 5 à 70% en poids, en particulier de 10 à 60% en poids, de préférence de 15 à 55% en poids.

9. Mélange sec pour matériaux de construction selon l'une ou plusieurs des revendications précédentes, **caractérisé en ce que** les additifs minéraux sont choisis dans le groupe des farines de calcaire et des sables silicieux.

10. Mélange sec pour matériaux de construction selon l'une ou plusieurs des revendications précédentes, **caractérisé en ce que** les additifs minéraux, par rapport au mélange sec pour matériaux de construction, sont présents en des quantités de 5 à 50% en poids, en particulier de 10 à 40% en poids, de préférence de 15 à 35% en poids.

11. Mélange sec pour matériaux de construction selon l'une ou plusieurs des revendications précédentes, **caractérisé en ce que** le mélange sec pour matériaux de construction présente en outre au moins un liant polymère, en particulier une poudre de dispersion, de préférence à base d'acétate de vinyle et/ou de versatate de vinyle le cas échéant modifié par un poly(alcool vinylique), en particulier en des quantités, par rapport au mélange sec pour matériaux de construction, de 0,01 à 5% en poids, en particulier de 0,1 à 5% en poids, de préférence de 1 à 4% en poids, de manière particulièrement préférée de 2 à 3% en poids.

12. Mélange sec pour matériaux de construction selon l'une ou plusieurs des revendications précédentes, **caractérisé en ce que** le mélange sec pour matériaux de construction contient en outre d'autres constituants et/ou additifs, en particulier choisis dans le groupe des liquéfiants, des retardateurs, des accélérateurs, des agents de fixation, des stabilisants, des antimousses, des matériaux d'étanchéité et/ou des charges.

13. Mélange sec pour matériaux de construction selon l'une ou plusieurs des revendications précédentes, **caractérisé en ce que** le mélange sec pour matériaux de construction présente une densité apparente < 1,3 g/cm³, de préférence dans la plage de 0,9 à 1,2 g/cm³, de manière particulièrement préférée dans la plage de 1,0 à 1,2 g/cm³.

14. Mélange sec pour matériaux de construction selon l'une ou plusieurs des revendications précédentes, **caractérisé en ce que** plus de 99% des particules du mélange sec pour matériaux de construction présentent des grosseurs de particules ou, selon le cas, des diamètres de particules inférieurs à 500 µm, en particulier inférieurs à 400 µm, de préférence inférieurs à 355 µm, selon une analyse par tamisage et/ou **en ce qu'**au moins 90% des particules du mélange sec pour matériaux de construction présentent des grosseurs de particules ou, selon le cas des diamètres de particules inférieurs à 200 µm selon une analyse par tamisage et/ou **en ce qu'**au moins 80%, de préférence au moins 85% des particules du mélange sec pour matériaux de construction présentent des grosseurs de particules ou, selon le cas, des diamètres de particules dans la plage de 4 à 200 µm selon une analyse par tamisage.

15. Utilisation d'un mélange sec pour matériaux de construction selon l'une quelconque des revendications 1 à 14 dans des masses de bouchage et/ou pour la préparation de masses de bouchage.

16. Masse de bouchage, pouvant être préparée en utilisant un mélange sec pour matériaux de construction selon les revendications 1 à 14 par gâchage avec de l'eau, en particulier en ajoutant 10 à 30% en poids, de préférence 20 à 30% en poids, d'eau et/ou contenant un mélange sec pour matériaux de construction selon les revendications 1 à 16 ainsi que de l'eau, en particulier en des quantités de 10 à 30% en poids, de préférence de 20 à 30% en poids, par rapport à la masse de bouchage.

17. Masse de bouchage selon la revendication 16, **caractérisée en ce que** la masse de bouchage présente une densité apparente fraîche dans la plage de 1,0 à 1,7 g/cm³, en particulier de 1,0 à 1,5 g/cm³, de préférence de 1,1 à 1,2 g/cm³.

18. Masse de bouchage, pouvant être préparée en utilisant un mélange sec pour matériaux de construction selon les revendications 1 à 14 par gâchage avec de l'eau, la masse de bouchage étant appliquée sur une sous-couche et ensuite durcie par prise et séchée.

19. Masse de bouchage selon la revendication 18, **caractérisée en ce que** la masse de bouchage appliquée sur une sous-couche et ensuite durcie par prise et séchée présente une résistance à la compression d'au moins 30 à 40 Newton/mm².
